# EUROPÄISCHE PATENTSCHRIFT

(11) **EP 1 347 228 B1**
(45) Veröffentlichungstag und Bekanntmachung des Hinweises auf die Patenterteilung: **10.11.2010**
(21) Anmeldenummer: 03006112.1
(22) Anmeldetag: 18.03.2003
(51) Int. Cl.: F16L 37/084, F16L 21/03

(54) **Kfz-Spritzwasserleitungs-Verbindungsanordnung**
Motor vehicle sprinkler connector
Dispositif de connexion pour un gicleur de lave-glace d'un véhicule automobile

(30) Priorität: 20.03.2002 DE 10212402
(43) Veröffentlichungstag der Anmeldung: 24.09.2003
(73) Patentinhaber: Fränkische Rohrwerke Gebr. Kirchner GmbH + Co KG, 97486 Königsberg/Bayern (DE)
(72) Erfinder: Schröter, Sören, 96049 Bamberg (DE)
(74) Vertreter: Schwabe - Sandmair - Marx

(56) Entgegenhaltungen:
- DE-A- 19 543 103
- DE-U- 9 406 337
- DE-U- 20 104 406
- GB-A- 2 022 727

## Beschreibung

Die Erfindung betrifft eine Kfz-Spritzwasserleitungs-Verbindungsanordnung mit den im Oberbegriff des Patentanspruchs 1 aufgeführten Merkmalen.

Im Stand der Technik sind diverse Arten von Spritzwasserleitungs-Verbindungsanordnungen bekannt, die eingesetzt werden, um verschiedene Bestandteile eines Kfz-Spritzwasserleitungssystems miteinander zu verbinden. So werden etwa Wasserleitungen an Pumpengehäuse oder Düsen bzw. einen Vorratstank angeschlossen. Die Düsen sind in der Regel nahe einer Windschutzscheibe, einem Scheinwerfer, einem Außenspiegel oder dgl. angeordnet. Sinn und Zweck der Anordnung ist es, Spritzwasser von einem Spritzwasserreservoir zu einem zu reinigenden Ort am Kraftfahrzeug (Kfz) zu transportieren.

Im Stand der Technik sind hierzu bereits verschiedene Lösungsansätze bekannt. Allgemein werden flexible Rohrleitungen eingesetzt, um das Spritzwasser zu befördern.

Ein weitergehender Vorschlag, der der DE 198 11 019.7 A1 zu entnehmen ist, betrifft den Einsatz von Wellrohren als Spritzwasserleitung, wobei die Wellrohre mit einem Kupplungsstück versehen sind, um die Wellrohre etwa an eine Spritzwasserpumpe oder dgl. anzubinden.

Gemäß der DE 196 53 257 C2 wird ein Anschluss eines Schlauches offenbart, wobei ein glatter Schlauch aus flexiblem Material mit einem Kupplungsstück versehen wird, das eine Stützhülse aufweist, die in den Innenumfang des Schlauches eingeführt wird. Zwei Schläuche können miteinander verbunden werden, indem jeweilige Kupplungsteile zum Einen als Vaterteil und zum Anderen als Mutterteil ausgebildet sind, um über eine Rasteinrichtung miteinander dichtend verbunden zu werden. Diese Verbindung funktioniert zum Einen nur mit flexiblen Schläuchen und zum Anderen sind die Herstellungs- und Montagekosten bei dieser Verbindungstechnik relativ hoch.

Da die vorliegende Erfindung auf dem Bereich der Massenprodukte angesiedelt sind, sind bereits geringe Vereinfachungen und Kostenersparnisse von immenser Bedeutung und in diesem Sinne ist die Anschlusstechnik gemäß der DE 196 53 257 C2 als nachteilig anzusehen.

Aus der DE 197 23 410 A1 ist eine Verbindungstechnik bekannt, bei der ein Wellrohr auf einen im Querschnitt leicht trichterförmigen Anschlussstutzen aufgeschoben wird und über Federbeine mit Haltenasen auf dem Stutzen gehalten wird. Dabei können zusätzlich O-Ringe eine Dichtigkeit herbeiführen, wobei diese O-Ringe in Wellenberge oder Wellentäler am Außen- bzw. Innenumfang des Wellrohres eingelegt werden sollen, um ihre Dichtwirkung entfalten zu können. Stabilisierende ringförmige Klemmelemente sollen dieser Verbindungstechnik die nötige Haltbarkeit verleihen. Auch diese Technik ist kostenaufwändig, umständlich und die Dichtheit kann hier insbesondere aufgrund der diversen Fertigungstoleranzen keinesfalls sichergestellt werden.

Aus dem DE 201 04 406.4 U1 ist eine Verbindungstechnik bekannt, bei der ein Anschlussstutzenbereich etwa an einer Spritzwasserpumpe einen Rastabschnitt aufweist, wobei ein einstückig mit einem Wellrohr ausgebildeter Anschlussstutzenabschnitt mit einem umfänglichen Dichtbereich ausgestattet ist, wobei dieser Dichtbereich einen größeren Außenumfang aufweist, als der korrespondierende Innenumfang des Anschlussstutzenbereiches der Spritzwasserpumpe. Auf diese Weise wird eine Aufweitung des Anschlussstutzenbereiches durch den Anschlussstutzenabschnitt des Wellrohres erzielt, um die nötige Dichtheit bereitzustellen. Bei dieser Technik können Kriecheffekte des Materials auftreten, so dass nach geraumer Zeit das Kunststoffmaterial aus dem Dichtmaterial wegkriecht, so dass im Laufe der Zeit die Verbindung undicht werden könnte.

Die GB 2 022 727 bezieht sich auf eine Brennstoffeinspritzdüse und eine elastomerische Buchse, die angepasst ist, um die Düse in einer Bohrung zu befestigen, die zu einer Einlassrohrleitung eines Zylinderkopfes oder zu einer Luftansaugleitung einer Brennkraftmaschine führt.

Die DE 94 06 337 U betrifft eine Schlauchleitung mit einem Schlauch, dessen Wandung eine polymere Innenschicht, mindestens eine textile Verstärkungsschicht sowie eine polymere Außenschicht aufweist und der an mindestens einem seiner Endbereiche mit einem weiblichen Steckkupplungselement fest verbunden ist.

Es gibt nun im Stand der Technik Anschlussstutzenabschnitte, die gemäß den oben aufgeführten Anschlusstechniken wenigstens zum Teil nachteilig an Verbindungsleitungen für Spritzwasser festgelegt werden können.

Es ist eine Aufgabe gemäß der vorliegenden Erfindung, bekannte Anschlussstutzenabschnitte in Kfz-Spritzwasserleitungssystemen leicht handhabbar und kostengünstig mit Wellrohrleitungen zu verbinden, wobei die bekannten Anschlussstutzenabschnitte ungeändert übernommen werden können sollen.

Es ist weiterhin eine Aufgabe der Erfindung, eine neue und dichte Verbindungsanordnung für Kfz-Spritzwasserleitungssysteme vorzuschlagen, die auch hohen Drücken standhalten kann, ohne mechanisch instabil oder undicht zu werden.

Die obigen Aufgaben werden wenigstens teilweise durch eine Verbindungsanordnung gemäß dem Patentanspruch 1 gelöst.

Die gemäß der Erfindung zu erzielenden Vorteile beruhen auf einem Muffenabschnitt, der in Einbaulage zwischen einem wellrohrseitigen Anschlussbereich und dem Anschlussstutzenabschnitt zu liegen kommt, wobei der Anschlussstutzenabschnitt beispielsweise einer Spritzwasserpumpe, einem Spritzwasservorratstank, einem Spritzwasserdüsenabschnitt oder dgl. zugeordnet sein kann.

Besonders vorteilhaft lässt sich die die Verbindungsanordnung dichtende Verbindung herstellen, wenn der Anschlussstutzenbereich des Wellrohres eine Dicht- und Eingriffsverengung aufweist, die mit einer wenigstens teilweise korrespondierenden Struktur am Außenumfang des Muffenabschnittes zusammenwirkt. In der Einbausituation kann die Dicht- und Eingriffsverengung auf den Muffenabschnitt drücken, um so eine Dichtfunktion zu erfüllen und in zweiter Linie kann bei Bedarf auch noch eine Haltefunktion ausgeübt werden. Eine korrespondierende Struktur am Außenumfang des Muffenabschnitts dient im Wesentlichen zur Platzierung des Muffenabschnittes gegenüber dem Anschlussstutzenbereich und damit gegenüber der Dicht- und Eingriffverengung am Innenumfang des Anschlussstutzenbereichs. Die korrespondierende Struktur am Außenumfang des Muffenumfangs ist zur Entfaltung der Dichtwirkung nicht unbedingt erforderlich, kann jedoch insbesondere bei der Lagejustierung der beiden Teile der erfindungsgemäßen Verbindungsanordnung behilflich sein.

Weitere Vorteile lassen sich erzielen, wenn an dem Muffenabschnitt eine Lagesteuerstruktur vorgesehen ist, die zu einer entsprechenden Lagesteuerstruktur an dem Anschlussstutzenbereich des Wellrohres korrespondiert. Hierdurch ist es möglich, den Muffenabschnitt in eine definierte Lage in den Anschlussstutzenbereich zu bringen und eine mechanische Fixierung zu erzielen. Diese Funktion ist besonders auch im Hinblick auf die Dicht- und Eingriffsverengung des Anschlussstutzenbereiches wesentlich, um hierdurch die Positionierung der Dicht- und Eingriffverengung in Bezug auf den Muffenabschnitt sicherstellen zu können.

Festzuhalten ist, dass natürlich umgekehrt auch der Muffenabschnitt eine entsprechende Ausbuchtung aufweisen kann, die in eine umfängliche Erstreckung des Anschlussstutzenbereiches einzugreifen vermag. Auch hierdurch lässt sich umgekehrt eine Dichtwirkung erzielen, wie sie durch die Dichtverengung am Anschlussstutzenbereich des Wellrohres erzielt werden soll.

Um zusätzlich eine mechanische Stabilität zu erzielen und ferner die Lagebestimmung der verschiedenen Teile der erfindungsgemäßen Erfindungsanordnung zueinander zu verbessern, kann der Anschlussstutzenbereich des Wellrohres einen Halteabschnitt aufweisen, der mit einem korrespondierenden Muffenhalteabschnitt zusammenwirkt, insbesondere auch um Ausreißkräften entgegenzuwirken.

Der Anschlussstutzenabschnitt, der etwa an einer Spritzwasserpumpe oder dgl. vorgesehen sein kann, der jedoch einem Kupplungsstück zugeordnet sein kann, über das eine Wellrohrverlängerung angeschlossen wird oder der zu einer Verzweigung gehören kann, über die eine Wellrohrleitung auf mehrere Anschlussleitungen verzweigt wird, kann in bekannter Weise einen Dichtbereich aufweisen. Dieser Dichtbereich, der in der Einbaulage mit der Dicht- und Eingriffsverengung des Anschlussstutzenbereiches und der dem Muffenabschnitt eigenen Struktur dichtend zusammenwirkt, kommt in der Einbaulage axial im Wesentlichen fluchtend mit dem anschließenden Wellrohr zu liegen.

Vorteilhafterweise umfasst der Anschlussstutzenabschnitt auch einen Festlegungsabschnitt in bekannter Weise, der mit einer Festlegungsstruktur des Muffenabschnittes und ggf. auch des Anschlussstutzenbereiches zusammenwirken kann.

Der Muffenabschnittes ist aus Gummi oder Moosgummi. Ein derartiges Material vereinfacht die Montage derart, dass einerseits die verschiedenen Bestandteile der erfindungsgemäßen Anordnung ohne großen Kraftaufwand miteinander verbunden werden und andererseits der Muffenabschnitt sich dichtend an die korrespondierenden Dichtflächen der verbleibenden Bestandteile der erfindungsgemäßen Verbindungsanordnung anlegt.

In diesem Zusammenhang ist es auch von Vorteil, wenn der Außenumfang des Muffenabschnittes umfänglich wenigstens bereichsweise größer als der korrespondierende Innenumfang des Anschlussstutzenbereiches des Wellrohres ist. Zusätzlich oder alternativ ist es in diesem Zusammenhang auch von Vorteil, wenn der Innenumfang des Muffenabschnittes umfänglich wenigstens bereichsweise kleiner als der Außenumfang des Anschlussstutzenabschnittes ist. Auch auf diese Weise lassen sich die nötigen dichtenden Spannungen und zusätzlichen Haltekräfte innerhalb der erfindungsgemäßen Anordnung aufbringen.

Nachfolgend wird die vorliegende Erfindung anhand einer bevorzugten Ausführungsform unter Bezugnahme auf die beigefügten Figuren näher erläutert. Dabei werden weitere Vorteile, Zielsetzungen und Merkmale gemäß der Erfindung offenbart, wobei in den Darstellungen
- Fig. 1: in einer teilweisen axialen längsschnittlichen Darstellung wesentliche Bestandteile der erfindungsgemäßen Verbindungsanordnung zeigt; und
- Fig. 2: einen teilweisen axialen Längsschnitt durch die fertiggestellte Verbindungsanordnung mit Bestandteilen gemäß Fig. 1 darstellt.

In den Figuren sind gleiche oder zumindest funktionsgleiche Bestandteile mit den gleichen Bezugszeichen benannt.

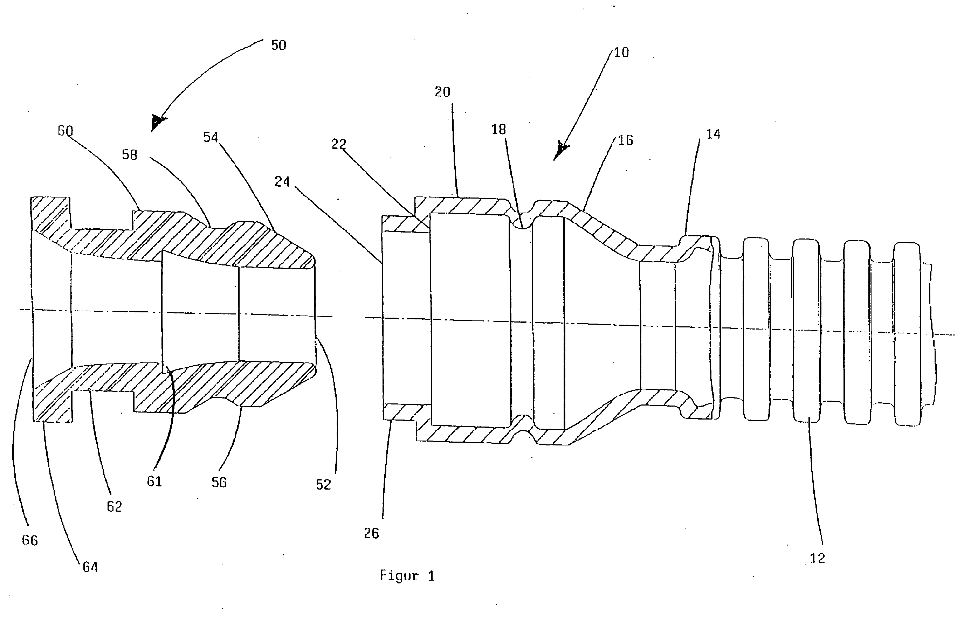

In Fig. 1 ist ein Wellrohr 12 dargestellt, an welches einstückig ein Anschlussstutzenbereich 10 anschließt. In Fortsetzung zu dem Anschlussstutzenbereich 10 ist ein Muffenabschnitt 50 dargestellt, der geformt ist, um in den Anschlussstutzenbereich 10 eingeführt zu werden.

An eine Wellung 14 am Ende des Wellrohres 12 schließt der Anschlussstutzenbereich 10 an, wobei zunächst ein sich radial aufweitender Abschnitt 16 vorgesehen ist. An diesen radial aufweitenden Bereich 16 schließt eine Dichtverengung 18 an, die auch einen Eingriff bewerkstelligen kann, falls eine Entsprechung dieser Struktur an dem einzuführenden Muffenabschnitt 15 vorgesehen ist.

In Fortsetzung ist ein im Durchmesser wieder erweiterter Bereich 20 vorgesehen, so dass umfänglich eine Pressung des Muffenabschnittes nur bereichsweise erzeugt wird.

An den erweiterten Bereich 20 schließt ein Eingriffsbereich 22 an, der für eine mechanische Stabilisierung der erfindungsgemäßen Verbindungsanordnung sorgt, indem er mit einem korrespondierenden Bereich des Muffenabschnittes in Eingriff zu treten vermag, um einerseits eine genaue Platzierung des Muffenabschnittes innerhalb des Anschlussstutzenbereiches 10 bewerkstelligen zu können und andererseits Ausreißkräften entgegenwirken zu können. Jenseits des Halteabschnittes 22 ist eine Verengung 26 vorgesehen, die gleichzeitig eine Einführöffnung 24 für den Muffenabschnitt 50 bilden kann.

Der Muffenabschnitt 50 weist axial offene Enden 52, 66 auf, die im montierten Zustand eine Strömung einer Flüssigkeit mit Spritzwasser oder einer anderen Reinigungsflüssigkeit, wie sie insbesondere in kalten Jahreszeiten verwendet werden, ermöglichen kann.

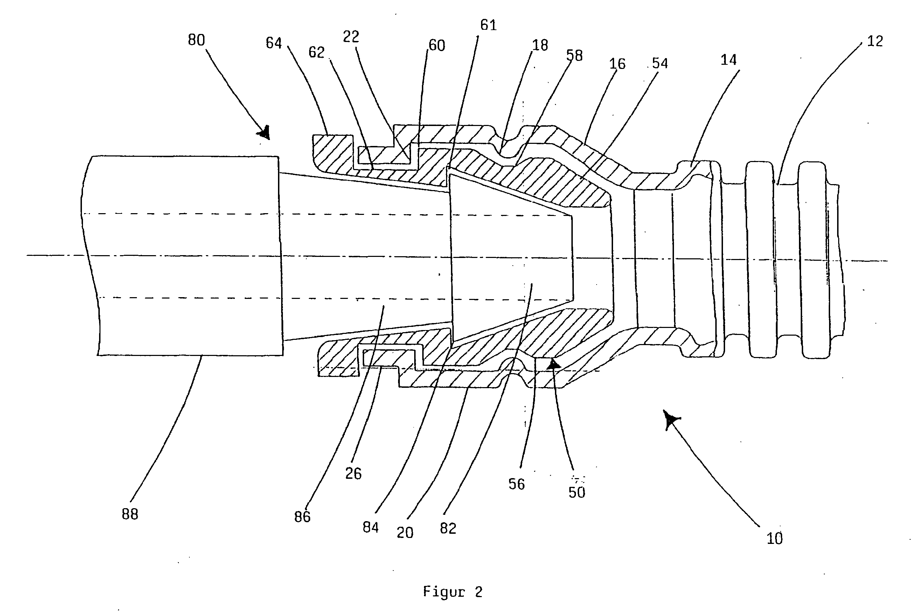

Korrespondierend zu der Struktur des Anschlussstutzenbereiches 10 und dessen Innenumfang ist der Außenumfang des Muffenabschnittes 50 ausgebildet. So ist ein schräger Bereich 54 vorgesehen, der zu dem sich radial erweiternden Abschnitt 16 am Anschlussstutzenbereich 10 korrespondiert. Bereits diese Bereiche können eine Dichtwirkung entfalten. An den abgeschrägten Bereich 54 schließt ein umfänglicher Bereich 56 mit im Wesentlichen gleichmäßigem Radius an, auf den eine Dichtfläche 58 folgt, die im in Fig. 2 gezeigten installierten Zustand gegenüber der Dichtverengung 18 zu liegen kommt. Die Dichtverengung 18 hat insofern die Funktion einer Dichtlippe. Jenseits der Dichtfläche 58 erweitert sich der Radius bzw. der Umfang des Muffenabschnittes 50, insbesondere um bei im Wesentlichen gleichbleibender Wandungsstärke am Innenumfang eine Eingriffs- bzw. Raststruktur 61 ausbilden zu können. Jenseits von diesem Bereich ist eine Eingriffsstruktur 60, 62 ausgebildet, die mit der korrespondierenden Eingriffsstruktur 26 an dem Anschlussstutzenbereich 10 in Eingriff gebracht werden kann. Der Bereich 64 bzw. der Schulterabschnitt zwischen den Bereichen 64 und 62 kann in Verbindung mit dem Abschnitt 26 des Anschlussstutzenbereiches 10 wiederum zusätzlich für eine exakte Positionierung der Dichtverengung bzw. Dichtlippe 18 gegenüber der korrespondierenden Dichtfläche 58 des Muffenabschnittes sorgen.

In Fig. 2 sind die Bereiche 10 und 50 in ihrer Einbaulage dargestellt, wobei zusätzlich ein Anschlussstutzenabschnitt 80 in seine Endlage innerhalb des Muffenabschnittes 50 gebracht ist.

Eine Dichtfläche 82 an dem dem Wellrohr 12 zugewandten Ende des Anschlussstutzenabschnittes 80 wird in eine genaue Lage zu dem Muffenabschnitt und damit zu der Dichtverengung bzw. der Dichtlippe 18 gebracht, so dass dieser Bereich mechanisch verpresst werden kann, um die nötige Dichtwirkung aufzubringen. In der Fig. 2 ist zu Zwecken der Verdeutlichung eine Darstellung mit Spiel zwischen den Teilen gewählt, während dies in der Realität nicht der Fall ist.

Eine Eingriffsschulter bzw. Rastschulter 84 ist im Eingriff mit dem Halte- bzw. Verbindungsbereich 61 des Muffenabschnittes 50. An die Schulter 84 schließt ein im Umfang reduzierter Bereich 86 an, der im Wesentlichen dazu dient, den Schulterbereich 84 auszubilden. Hieran schließt ein Fortsatz 88 an, der etwa einstückig mit einem Pumpengehäuse ausgebildet sein kann, in ein Pumpengehäuse eingeschraubt sein kann oder dgl. mehr.

## Patentansprüche

1. Kfz-Spritzwasserleitungs-Verbindungsanordnung zum Anschließen eines Kunststoffwellrohres innerhalb eines Kfz-Spritzwasserleitungssystems mit einem Wellrohrleitungsabschnitt (12) und mit einem Anschlussstutzenabschnitt (80), wobei ein Muffenabschnitt (50) in Einbaulage zwischen einem wellrohrseitigen Anschlussstutzenbereich (10) und dem Anschlussstutzenabschnitt (80) der Verbindungsanordnung dichtend zu liegen kommt, wobei eine Lagesteuerstruktur (16, 54, bzw. 22, 60, 62, 26) an dem Muffenabschnitt (50) und dazu korrespondierend an dem Anschlussstutzenbereich (10) des Wellrohres (12) vorgesehen ist, um den Muffenabschnitt (50) in eine definierte Lage in dem wellrohrseitigen Anschlussstutzenbereich (10) zu bringen und darin zu halten, wobei der Anschlussstutzenbereich (10) des Wellrohres (12) eine Dichtverengung (18) am Innenumfang aufweist, die mit einer wenigstens teilweise korrespondierenden Struktur (58) am Außenumfang des Muffenabschnittes (50) zusammenwirkt, wobei der Muffenabschnitt (50) aus Gummi oder Mossgummi ist.

2. Verbindungsanordnung nach Anspruch 1, **dadurch gekennzeichnet, dass** der Anschlussstutzenbereich (10) des Wellrohres (12) einen Halteabschnitt (22) umfasst, der mit einem korrespondierenden Muffenhalteabschnitt (60) zusammenwirkt, um Ausreißkräften entgegenzuwirken.

3. Verbindungsanordnung nach einem der Ansprüche 1 oder 2, **dadurch gekennzeichnet, dass** der Anschlussstutzenabschnitt (80) einen Dichtebereich (82) aufweist, der in der Einbaulage mit der Dichtverengung (18) des Anschlussstutzenbereiches (10) und der dem Muffenabschnitt (50) eigenen Struktur (58) dichtend zusammenwirkt.

4. Verbindungsanordnung nach einem der Ansprüche 1 bis 3, **dadurch gekennzeichnet, dass** der Anschlussstutzenabschnitt (80) einen Festlegungsabschnitt (84) aufweist, der mit einer Festlegungsstruktur (61) des Muffenabschnitts und ggf. des Anschlussstutzenbereichs (10) zusammenwirkt.

5. Verbindungsanordnung nach einem der Ansprüche 1 bis 4, **dadurch gekennzeichnet, dass** der Außenumfang des Muffenabschnitts (50) umfänglich wenigstens bereichsweise größer als der korrespondierende Innenumfang des Anschlussstutzenbereiches (10) des Wellrohres (12) ist.

6. Verbindungsanordnung nach einem der Ansprüche 1 bis 5, **dadurch gekennzeichnet, dass** der Innenumfang des Muffenabschnitts (50) umfänglich wenigstens bereichsweise kleiner als der Außenumfang des Anschlussstutzenabschnittes (80) ist.

## Claims

1. Motor vehicle jet water pipe connection arrangement for connecting a plastic corrugated tube within a motor vehicle jet water pipe system to a corrugated pipe section (12) and with a connector fitting portion (80), wherein a sleeve portion (50) is moved so that it sits between a connector fitting region (10) at the corrugated tube end and the connector fitting portion (80) of the connection arrangement so that it forms a seal in the fitted position, and a position controlling structure (16, 54, respectively 22, 60, 62, 26) is provided on the sleeve portion (50) and correspondingly on the connector fitting region (10) of the corrugated tube (12) in order to move the sleeve portion (50) into a defined position in the connector fitting region (10) at the corrugated tube end and retain it there, and the connector fitting region (10) of the corrugated tube (12) has a sealing constriction (18) on the inner circumference which co-operates with an at least partially matching structure (58) on the outer circumference of the sleeve portion (50), and the sleeve portion (50) is made from rubber or microcellular rubber.

2. Connection arrangement as claimed in claim 1, **characterised in that** the connector fitting region (10) of the corrugated tube (12) has a retaining portion (22), which co-operates with a matching sleeve retaining portion (60) in order to counteract forces which might cause it to be torn out.

3. Connection arrangement as claimed in one of claims 1 or 2, **characterised in that** the connector fitting portion (80) has a seal region (82), which in the fitted position co-operates with the sealing constriction (18) of the connector fitting region (10) and the structure (58) specific to the sleeve portion (50) forming a seal.

4. Connection arrangement as claimed in one of claims 1 to 3, **characterised in that** the connector fitting portion (80) has a fixing portion (84), which co-operates with a fixing structure (61) of the sleeve portion and optionally the connector fitting region (10).

5. Connection arrangement as claimed in one of claims 1 to 4, **characterised in that** the outer circumference of the sleeve portion (50) is circumferentially bigger than the corresponding inner circumference of the connector fitting region (10) of the corrugated tube (12) in at least certain regions.

6. Connection arrangement as claimed in one of claims 1 to 5, **characterised in that** the inner circumference of the sleeve portion (50) is circumferentially smaller than the outer circumference of the connector fitting portion (80) in at least certain regions.

## Revendications

1. Agencement de raccordement d'une conduite de projection d'eau de véhicule automobile, destiné à raccorder un tuyau annelé en matière plastique à l'intérieur d'un système de conduite de projection d'eau de véhicule automobile, à une partie de conduite de tuyau annelé (12) et à une partie de support de raccord (80), dans lequel une partie de manchon (50) vient en appui de manière étanche dans une position de montage entre une zone de support de raccord côté tuyau annelé (10) et la partie de support de raccord (80) de l'agencement de raccordement, dans lequel une structure de commande de position (16, 54 ou 22, 60, 62, 26) est prévue sur la partie de manchon (50) et de manière correspondante sur la zone de support de raccord (10) du tuyau annelé (12) afin d'amener la partie de manchon (50) dans une position définie dans la zone de support de raccord côté tuyau annelé (10) et de l'y maintenir, dans lequel la zone de support de raccord (10) du tuyau annelé (12) comporte un rétrécissement d'étanchéité (18) sur sa circonférence intérieure qui coopère avec une structure au moins partiellement correspondante (58) sur la circonférence extérieure de la partie de manchon (50), dans lequel la partie de manchon (50) est constituée de caoutchouc ou de caoutchouc spongieux.

2. Agencement de raccordement selon la revendication 1, **caractérisé en ce que** la zone de support de raccord (10) du tuyau annelé (12) comporte une partie de retenue (22) qui coopère avec une partie de retenue de manchon correspondante (60) afin de contrecarrer les forces d'arrachement.

3. Agencement de raccordement selon l'une quelconque des revendications 1 ou 2, **caractérisé en ce que** la partie de support de raccord (80) comporte une zone d'étanchéité (82) qui, dans la position de montage, coopère de manière étanche avec le rétrécissement d'étanchéité (18) de la zone de support de raccord (10) et la structure (58) spécifique à la partie de manchon (50).

4. Agencement de raccordement selon l'une quelconque des revendications 1 à 3, **caractérisé en ce que** la partie de support de raccord (80) comporte une partie de fixation (84) qui coopère avec une structure de fixation (61) de la partie de manchon et, le cas échéant, de la zone de support de raccord (10).

5. Agencement de raccordement selon l'une quelconque des revendications 1 à 4, **caractérisé en ce que** la circonférence extérieure de la partie de manchon (50) est circonférentiellement plus grande, au moins dans certaines zones, que la circonférence intérieure correspondante de la zone de support de raccord (10) du tuyau annelé (12).

6. Agencement de raccordement selon l'une quelconque des revendications 1 à 5, **caractérisé en ce que** la circonférence intérieure de la partie de manchon (50) est circonférentiellement plus petite, au moins dans certaines zones, que la circonférence extérieure de la partie de support de raccord (80).
